(19) Europäisches Patentamt
European Patent Office
Office européen des brevets

(11) **EP 3 137 514 B1**

(12) **EUROPEAN PATENT SPECIFICATION**

(45) Date of publication and mention
of the grant of the patent:
**25.10.2023   Bulletin 2023/43**

(21) Application number: **15785677.4**

(22) Date of filing: **24.04.2015**

(51) International Patent Classification (IPC):
***B01J 19/12*** *(2006.01)*

(52) Cooperative Patent Classification (CPC):
(C-Sets available)
**C08F 8/22; B01F 27/191; B01F 27/91; B01J 8/10;
B01J 8/222; B01J 19/0066; B01J 19/02;
B01J 19/123; B01J 19/18;** B01J 2219/00779;
B01J 2219/0254; B01J 2219/0871; B01J 2219/089

(Cont.)

(86) International application number:
**PCT/IB2015/052999**

(87) International publication number:
**WO 2015/166388 (05.11.2015 Gazette 2015/44)**

(54) **APPARATUS FOR HALOGENATION OF POLYMER**

VORRICHTUNG ZUR HALOGENIERUNG VON POLYMER

APPAREIL POUR L'HALOGÉNATION DE POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.05.2014   IN 1536MU2014**

(43) Date of publication of application:
**08.03.2017   Bulletin 2017/10**

(73) Proprietor: **Reliance Industries Limited
Mumbai 400 021 Maharashtra (IN)**

(72) Inventors:
• **MUNSHI, Pradip
Vadodara 391410 (IN)**
• **INGLE, Ninad
Pune 411052 (IN)**
• **KAPADIA, Pradeep Paresh
Mumbai 400067 (IN)**
• **JASRA, Raksh Vir
Vadodara 390008 (IN)**

(74) Representative: **Barker Brettell LLP
100 Hagley Road
Edgbaston
Birmingham B16 8QQ (GB)**

(56) References cited:
**EP-A2- 2 377 611      WO-A2-2014/061035
CA-A1- 2 854 621      US-A- 2 291 574
US-A- 2 503 252       US-A- 2 920 064
US-A- 3 736 240       US-A- 4 874 823**

• **W. BUJALSKI ET AL: "The use of upward
pumping 45° pitched blade turbine impellers in
three-phase reactors", CHEMICAL
ENGINEERING SCIENCE, vol. 45, no. 2, 1990,
pages 415-421, XP055470167, GB ISSN:
0009-2509, DOI: 10.1016/0009-2509(90)87027-P**

(52) Cooperative Patent Classification (CPC): (Cont.)

C-Sets
**C08F 8/22, C08F 114/06**

**Description**

**FIELD OF THE DISCLOSURE**

The present disclosure relates to an apparatus for halogenation of a polymer.

**BACKGROUND**

Polyvinyl chloride (PVC) is converted to chlorinated polyvinyl chloride (CPVC) by chlorination via a free radical reaction which is initiated by application of heat and/or UV light. Chlorine content of the polymer defines its properties and applications. Most commercial CPVC resins have chlorine content in the range from 63% to 69%. The time required for desired chlorine content, extent of chlorination, colour and uniformity of chlorination at a particular temperature are important parameters for efficient preparation of high quality product.

However, conventional apparatus for halogenation of polymers have not been effective in performing efficient halogenation. Such apparatus are ineffective in obtaining a high halogenation reaction rate. Further, halogenated polymers formed by using such apparatus are non-uniform in nature which results in poor physical properties of the polymers. Furthermore, conventional apparatus cause a non-uniform distribution of temperature in the polymer bed of the vessel which results in localized hot spots. These hot spots in turn cause solid polymer masses to build-up in the static areas of the reactor (such as on the reactor head), thereby causing a layer of polymer on the upper surface of the slurry which restricts radiations used in the halogenation process to penetrate the entire slurry. Due to build-up of polymer masses in the static areas, the polymer tends to bridge and plug the discharge lines. This may in turn increase the level of the polymer bed in the vessel and eventually leads to a complete shutdown of the reactor.

Some of the prior art is described below:

US3591571 mentions a process that is carried out with the help of a device having a cylindrical glass autoclave equipped with a circulating water jacket, a thermometer, a paddle type agitator and a plurality of UV lamps surrounding the reactor. The water jacket is provided with circulating warm water.

US4377459 mentions chlorination process that is carried out with the help of a device having a reactor with a jacket, a paddle stirrer having a central shaft and blades provided to churn a mass of macrogranules of PVC in the reactor and a bank of ultraviolet lamps sealingly fitted into the cover of the reactor.

US4102760 mentions a process for post chlorinating vinyldene fluoride polymer to provide a chlorinated resin. Chlorination of vinyldene fluoride polymer is performed with the help of a device having a cylindrical glass reactor equipped with a quartz immersion water-cooled condenser containing a quartz mercury vapor lamp (an ultraviolet light source) and a stirrer.

US6384149 mentions a method of preparation of a polyvinyl chloride resin having an average particle diameter of at least 150μm and porosity of at least 0.15cc/g at 31-1011psi. The chlorination process is performed by suspending the resin in an aqueous medium and chlorinated by blowing gaseous chlorine into aqueous suspension. The method is carried out by using a device having a reactor equipped with a stirrer.

Chlorination of vinyl chloride resin is performed by using an apparatus having a glass tank equipped with a stirrer and a mercury lamp (UV lamp).

US4377459 mentions a process for the preparation of CPVC in the form of free-flowing macro-granules of PVC. The chlorination process is carried out with the help of a device having a reactor with a jacket, a paddle stirrer having a central shaft and blades provided to churn a mass of macrogranules of PVC in the reactor and a bank of ultraviolet lamps sealingly fitted into the cover of the reactor.

GB1318078 mentions a process for chlorination of granular PVC or polyethelene with gaseous chlorine at a pressure from 1 to 5 atm absolute in the presence of a radical forming agent and/or under the influence of a radiation wherein the finely granular polymer is chlorinated in a mechanically produced fluidized layer. The process is carried out by using a reactor having plough shaped agitating members arranged about a central horizontal axis of a mixer.

US6197895 mentions a process for the production of chlorinated polyvinyl chloride resin. In producing CPVC resin having chlorine content from 60 to 73 % by weight wherein PVC resin is suspended in aqueous medium and chlorine gas is blown into said suspension under beam of a mercury lamp in the temperature range of a 40°C to 90°C. An organic peroxide compound having a 10 h half-life in the range of 40 to 90 °C is added into reaction vessel in the ratio of 0.01 - 1 parts to 100 part of the PVC resin by weight before the chlorination reaction is started.

US2291574 relates to a method for the chlorination of polymeric compound, wherein the polymeric compound is exposed to light waves using a light source, thereby bringing about rapid reaction of chlorine with the polymer. The light source disclosed in US2291574 is disposed inside the reactor.

US2503252 discloses a method for the chlorination of ethylene polymer. The method includes the substitution of halogenation of high molecular weight hydrocarbon material. US2503252 does not disclose the location of the light source.

US2920064 discloses a process which comprises chlorinating a normally solid polymer. The process comprises chlorinating a normally solid polymer of an aliphatic 1-olefin having a maximum monomer chain length of 8 carbon atoms, at a temperature in the range from a temperature sufficiently high to dissolve the polymer to the solvent reflux temperature to obtain a partially chlorinated polymer containing up to about 20 weight percent combined chlorine which partially chlorinated polymer is soluble at atmospheric pressure in a solvent, without effecting substantial halogenation of the solvent, dissolving the partially chlorinated polymer in a solvent selected from the latter-mentioned group and continuing the chlorination in the resulting solution to obtain a more highly chlorinated polymer, the original unchlorinated polymer being substantially insoluble in carbon tetrachloride at those temperatures at which carbon tetra chloride exists as a liquid at atmospheric pressure. US2920064 does not disclose photochlorination. Moreover, US2920064 does not specifically disclose the particular features of the stirrer.

WO2014/061035 discloses a process for halogenation of a hydrocarbon. The apparatus used in WO2014/061035 comprises a reactor, at least one light source disposed outside the reactor at a distance of 0.5 cm to 12 cm, a UV light source and a centrally mounted stirrer emitting light in the range of 250 nm to 355 nm. WO2014/061035 does not disclose the apparatus having a stirrer comprising a plurality of blades at a blade angle in the range of 30 degrees to 60 degrees.

EP2377611 discloses an apparatus for photochemical reactions that includes a reactor and a light source situated so that light from the light source is directed through a portion of the reactor wall. The light from a light source is directed through a reactor wall to interact with reactants in the reactor. The halogenated hydrocarbon produced by the photochlorination is subjected to dehydrohalogenation. EP2377611 does not disclose a particular design of the stirrer.

CA2854621 discloses a method for producing a chlorinated vinyl chloride resin including chlorinating a vinyl chloride resin by irradiating the inside of a reactor, into which the vinyl chloride resin and chlorine have been introduced, with ultraviolet light, thereby producing a chlorinated vinyl chloride resin. CA2854621 discloses the light source inside the reactor.

US4874823 discloses a chlorinated copolymer made from vinyl chloride monomers and vinyl containing comonomers which has good low (e.g., about 120° C.) and high (e.g., about 170° C.) temperature stability as measured by hydrogen chloride elimination. US4874823 does not disclose a particular design of the stirrer.

US 3736240 discloses a post-chlorinated resin by subjecting to chlorination a vinyl chloride-propylene copolymer containing from 1 to about 10% by weight propylene, by dissolving the copolymer in chloroform to produce a solution of the copolymer, and passing chlorine into the solution of the copolymer while subjected to light irradiation, the chlorine being introduced in amounts sufficient to provide the resin with a chlorine content of at least 67 to about 73 weight percent. Further, US 3736240 does not disclose a particular design of the stirrer.

W. BUJALSKI ET AL discloses that because of the superior hydrodynamic versatility and comparable mass transfer performance of 6MFU sparger combinations, overall geometry offers the best operating characteristics amongst the geometries tested. Further, the stirrer as disclosed in W. BUJALSKI ET AL having a single set of blades.

However, an apparatus that performs uniform chlorination of the polymer has not been mentioned. Further, in the suggested processes a layer is formed on the upper surface of the slurry within a reaction vessel which reduces stability due to an increase in polymer residue. Furthermore, facilitation of a uniform reaction and increased rate of chlorination has not been mentioned. There is thus felt a need for an apparatus for halogenation of a polymer, having the aforesaid parameters.

## OBJECTS

Some of the objects of the present disclosure aimed to reduce one or more problems or to at least provide an alternative method, are listed herein below:

An object of the present disclosure is to provide an apparatus that provides a homogeneous mass within a reactor.

Another object of the present disclosure is to provide an apparatus that accelerates reaction rate in a polymerization process.

Another object of the present disclosure is to provide an apparatus that uniformly distributes temperature within a reactor.

Another object of the present disclosure is to provide an apparatus that eliminates formation of hot spots in a reactor.

Still another object of the present disclosure is to provide an apparatus that facilitates a uniform and increased rate of reaction.

Further object of the present disclosure is to provide an apparatus that eliminates formation of layer on the upper surface of slurry within a reactor.

Further object of the present disclosure to provide an apparatus that is simple in construction. Further object of the present disclosure is to provide an apparatus that prepares a polymer in a short period of time.

Further object of the present disclosure is to provide an apparatus that consumes comparatively less amount of energy.

Still another object of the present disclosure is to provide an apparatus that eliminates treatment of the slurry before polymerization process.

## SUMMARY

In accordance with an embodiment of the present disclosure, there is provided an apparatus (100) for the halogenation of a polymer. The apparatus includes a reactor (102) for receiving polymer slurry for halogenation of the polymer, at least one light source (104) disposed outside of the reactor (102) at a distance ranging from 0.5 centimetre to 2 centimetres for facilitating irradiation into the slurry, a stirrer (106) configured to prevent formation of a layer on an upper surface of the slurry within the reactor (102), the stirrer (106) having from 2 to 10 blades attached to a spindle (120), the blades (118) having a blade angle of approximately 45 degrees, the stirrer (106) disposed within the reactor (102) and adapted to agitate the slurry at a speed of stirrer ranging from 400 rpm to 800 rpm such that the tip of vortex formed by stirring process remains above the blades (118) and a heater (108) adapted to heat the polymer slurry. The stirrer (106) is configured to rotate the sets of blades (118) in the same direction and further includes at least one impeller (122), each impeller having a central opening (124), the spindle (120) is co-axially inserted through the central opening (124), the blades (118) are radially extended from the impeller (122). In accordance with an embodiment of the present disclosure, the apparatus further includes a temperature sensing element for sensing temperature of the slurry.

Typically, the at least one light source is a ultra-violet light source.

Preferably, the at least one light source radiates a light of wavelength in the range of 250 nm to 355 nm.

Preferably, the heater heats the slurry at a temperature of 60-100$^0$C, preferably 70$^0$C.

Preferably, the apparatus is adapted to effect at least 67% halogenation (by weight) of the polymer over a time period ranging between 5 hours and 12 hours.

## BRIEF DESCRIPTION OF THE ACCOMPANYING DRAWINGS

The apparatus for halogenation of a polymer of the present disclosure will now be described with the help of the accompanying drawings, in which:

FIGURE 1 illustrates a schematic representation of an apparatus for halogenation of a polymer in accordance with an embodiment of the present disclosure;

FIGURE 2 illustrates a perspective view of a stirrer of the apparatus of figure 1;

FIGURE 3 illustrates a perspective view of a plurality of blades of a stirrer in accordance with an embodiment of the present disclosure;

FIGURE 4 illustrates a graphical representation of relation between distance of the light source from reactor surface and Time (h) to reach 67% chlorination (by weight) and Thermal Stability by conductivity (sec) x 100; and

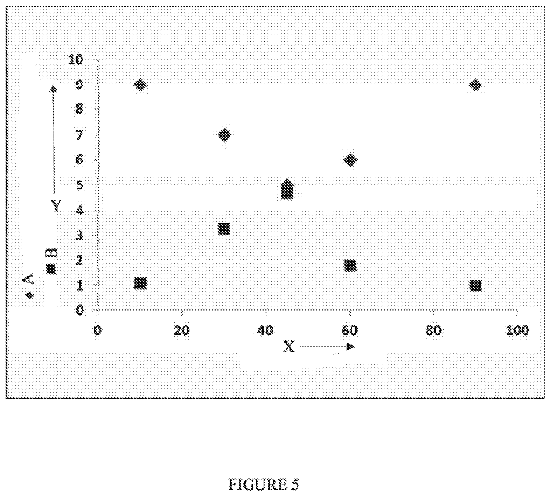

FIGURE 5 illustrates a graphical representation of relation between angle of the stirrer and time required to reach 67% chlorination (by weight) and Thermal Stability by conductivity (sec) x 100.

## DETAILED DESCRIPTION

The present disclosure relates to an apparatus for halogenation of a polymer. The apparatus comprises: a reactor (102) for receiving polymer slurry for halogenation of the polymer; at least one light source (104) disposed outside of the reactor (102) at a distance ranging from 0.5 centimetre to 2 centimetres for facilitating irradiation into the slurry; a stirrer (106) configured to prevent formation of a layer on an upper surface of the slurry within the reactor (102), the stirrer (106) having from 2 to 10 blades attached to a spindle (120), the blades (118) having a blade angle of approximately 45 degrees, the stirrer (106) disposed within the reactor (102) and adapted to agitate the slurry at a speed of stirrer ranging from 400 rpm to 800 rpm such that the tip of vortex formed by stirring process remains above the blades (118); and a heater (108) adapted to heat the polymer slurry. The stirrer (106) is configured to rotate the sets of blades (118) in the same direction and further includes at least one impeller (122), each impeller having a central opening (124), the spindle (120) is co-axially inserted through the central opening (124), the blades (118) are radially extended from the impeller (122).

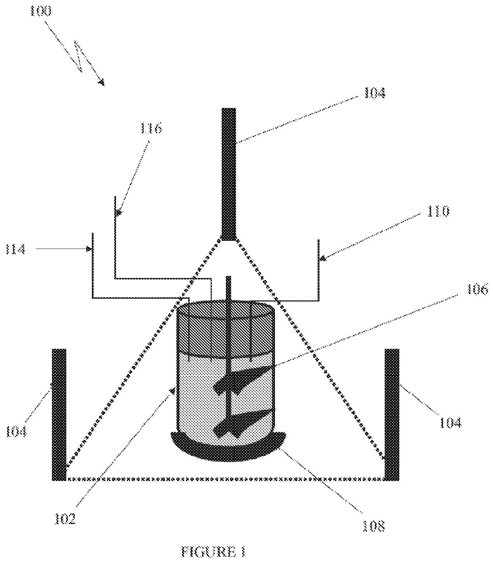

Referring to Figure 1, the apparatus **100** for halogenation of a polymer in accordance with an embodiment of the present disclosure includes the following components:

• a reactor **102;**
• at least one light source **104;**
• a stirrer **106;** and

- a heater **108.**

The reactor **102** is adapted to contain slurry for halogenation of the polymer. Typically, the walls of said reactor **102** are made of glass and preferably quartz. In one embodiment, the reactor **102** is adapted to accommodate the polyvinyl chloride (PVC) slurry. The reactor **102** is surrounded by at least one light source **104** for facilitating irradiation of slurry and to increase the rate of reaction for halogenation of the polymer. Typically, the light source **104** is provided such as to cover maximum surface area of the reactor **102** for increasing the efficiency of the halogenation process of the polymer and reducing hot spot within the reactor **102**. In one embodiment, the light source **104** is disposed outside of the reactor **102** at a distance ranging from 0.5 cm to 2 cm as illustrated in FIGURE 1. Preferably, the light source **104** is disposed outside the reactor **102** at a distance of 1 centimeter from the reactor **102**. In another embodiment, the apparatus **100** includes three light sources **104**. Generally, the slurry has varying refractive index throughout the depth of the reactor **102**. Due to which transmittance of light through the slurry decayed to $1/5^{th}$ in 1cm from the surface of the reactor wall indicating reasonable irradiance of the slurry during reaction. The light source **104** includes but is not limited to an ultraviolet light source. In accordance with an embodiment of the present disclosure, the light source **104** radiates light of wavelength in the range of 250nm to 355nm. The light source **104** is chosen from the group consisting of solid state light source, gas discharge light source, organic light source, LASER and high-intensity discharge light source. Typically, the proportion of irradiation flux exposed to the surface of the reactor **102** is in the range of 10-50 mWatts/cm$^2$ and preferably in the range of 15-25 mWatts/cm$^2$.

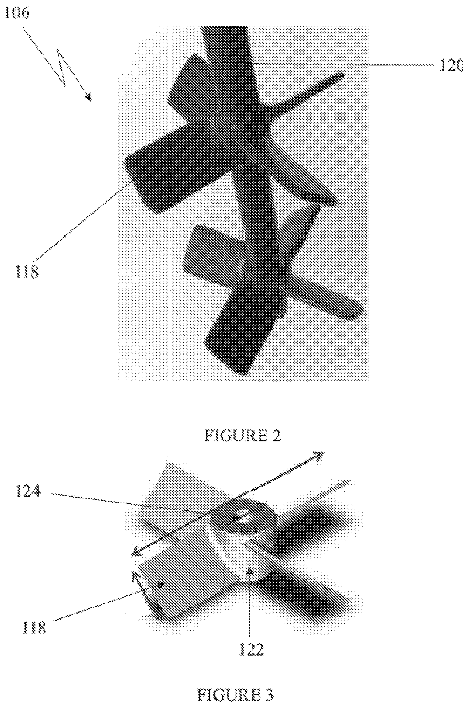

Referring to Figure 2, the stirrer **106** has a plurality of blades **118** having a predefined blade angle. In one embodiment, the blade angle is approximately 45 degrees. The plurality of blades **118** are attached to a spindle **120**. In accordance with the present disclosure, number of blades **118** of the stirrer **106** is ranging from 2 to 10. In accordance with an embodiment of the present disclosure, the blades **118** are integral with the spindle **120**. In accordance with another embodiment of the present disclosure, the blades **118** are removably fixed to the spindle **120**. The stirrer **106** is disposed inside the reactor **102** for agitating the mass of the slurry while halogenation of the polymer to get a homogeneous mass of the slurry inside the reactor **102**. The stirrer **106** prevents formation of layer on an upper surface of the slurry within the reactor **102,** thereby preventing floating of the layer of slurry on the upper surface of the slurry within the reactor **102**. Tilting of the blades **118** at a blade angle of about 45 degrees facilitates optimized flow pattern of the slurry to avoid floating of the layer of slurry on the upper surface of the slurry within the reactor **102**. Floating of the layer of slurry on the upper surface of the slurry within the reactor **102** depends upon the stirring speed and the construction of the stirrer **106**. Generally, floating of the layer of slurry on the upper surface of the slurry within the reactor **102** reduces with increase in the stirring speed. In accordance with an embodiment of the present disclosure, the speed of the stirrer **106** is optimized in the range of 400 rpm to 800 rpm such that the tip of vortex formed by stirring process remains above the blades **118**. The stirrer **106** also eliminates choosing of exact particle size range of the polymer and addition of dispersion or swelling agents.

Referring to Figure 3, the stirrer **106** includes at least one impeller **122** in accordance with an embodiment of the present disclosure. Each of the impeller **122** has a central opening **124**. In one embodiment, the impeller **122** is a pedal type impeller. However, the present disclosure is not limited to any particular type of impeller described. The spindle **120** is coaxially inserted through the central opening **124**. Further, the blades **118** are radially extended from the impeller **122**. In accordance with an embodiment of the present disclosure, the blades **118** are integral with the impeller **122**. In accordance with another embodiment of the present disclosure, the blades **118** are removably fixed to the impeller **122**. The blades **118** are spaced apart from each other with a distance depending upon the number of blades **118**.

Further, coloration of halogenated polymer appears due to higher temperature. The heater **108** is provided to heat the slurry at a temperature of around 70°C which prevents coloration of the polymer. The heater **108** is provided to uniformly distribute the temperature within the reactor **102**. In accordance with an embodiment of the present disclosure, apparatus **100** includes a temperature sensing element **110** for sensing temperature of the slurry inside the reactor **102**. The temperature sensing element **110** co-operates with the heater **108** to maintain the temperature of the slurry at around 70$^0$C.

In accordance with an exemplary embodiment of the present disclosure, the stirrer **106** is installed in a vessel such as a reactor **102** used for chlorination of polyvinyl chloride (PVC) of K value 67 to obtain chlorinated polyvinyl chloride (CPVC) of 67% chlorine (by weight). Generally, a quartz reactor is used as the vessel. The vessel is filled with 18% (by weight) aqueous PVC slurry and is surrounded by light sources **104** such as ultra-violet (UV) lamps radiating a light of wavelength about 254 nm. The PVC slurry is chlorinated at about 70$^0$C under chlorine (gas) flow of about 29.7g/h and nitrogen gas flow through a dual inlet **114** and a dual outlet **116**. The entire process of producing CPVC is optimized using the energy emitted from the light source **104**. It is generally observed that the a layer of CPVC slurry floats on the top surface of the slurry which results in an opaque slurry that restricts the UV light to penetrate the slurry for uniform chlorination of the PVC. The stirrer **106** in accordance with the present disclosure eliminates formation of layer of CPVC slurry on the top surface of the slurry and increases the chlorination rate. The stirrer **106** is operated with a predefined speed by using a rotator, during the process of chlorination. Typically, the distance between the blades **118** is kept in the range of 2 to 6 inches. Floating of the CPVC reduces with the increase in speed of the stirrer **106.** A typical range for the speed of rotation of the stirrer **106** in accordance with this embodiment is in the range of 400 rpm to 800 rpm.

**Example 1:** 1010g aqueous PVC slurry from plant containing 160g PVC was taken in a reactor **102.** Agitation was started at speed of 200rpm for initial 5min while nitrogen gas was purged inside the reactor **102** through the slurry. Speed of rotation of stirrer **106** was increased to 650rpm and nitrogen purging was continued for another 40min in order to remove air or oxygen from the reactor **102** and slurry. Nitrogen flow was stopped and chlorine was purged through the slurry maintaining same conditions. Ultraviolet (UV) lamp was switched on when the reactor **102** and slurry were found to be saturated with chlorine. Temperature was maintained at 70°C similar to the plant slurry temperature. After 6h of UV lamp irradiation, reaction was stopped and chlorine purging was replaced by nitrogen purging for 1 hour. The chlorinated polyvinyl chloride (CPVC) slurry thereafter was filtered and washed with 1500mL water in three parts. The wet cake was dried at 70°C under blow of air and CPVC was obtained as white dry powder. Percentage of chlorine content (by weight) was checked by weight increase in respect to PVC dry powder using formula:

$$\text{Percentage of Chlorine in CPVC} = [102.9 - 46.2(A/B)];$$

wherein A = weight of PVC in gram,

B = weight of CPVC obtained in gram.

The chorine present in A gram PVC was considered 0.567A gram. The result was validated by ASTM F 442M - 99, oxygen flask method which remained within $\pm$ 0.5 %.

**Example 2:** In this example the reaction and recovery of CPVC were carried in similar manner as in **example 1** except the time for UV irradiation was 4 hours.

**Example 3:** In this example the same reaction in similar manner was carried as in **example 1** except the time for UV irradiation was 2 hours.

**Example 4:** The procedure for this example remains unchanged as that of **example 1** except that the reaction temperature was maintained at 90°C throughout the reaction.

**Example 5:** Everything remains unchanged to this example except the UV lamps of only 354nm wavelength were used than those mentioned in example 1.

**Example 6:** This example illustrates the speed of rotation of agitator kept at 400 rpm while keeping the process unchanged to that used in **example 1.**

**Example 7:** This example states the speed of rotation 900rpm while the process is unchanged to that used in **example1.** The material was found to be splashed on top of the reactor resulting in ineffective chlorination.

**Example 8:** This example illustrates the reaction in similar way that was carried out in **example 1** except the time of reaction was prolonged to 9 hours.

**Example 9:** Similar reaction was carried as described in **example 1.** Only difference made was washing at end of the reaction. Mother liquor of the reaction was neutralized by sodium hydroxide, filtered and washed with 1000mL water to get rid of sodium chloride and excess sodium hydroxide.

**Example 10:** This example states that the same amount of plant slurry as used in **example 1** was filtered using Whatman-42 filter paper where no visible particle and sediment was seen on the filtrate. The filtrate was chlorinated at similar condition to that stated in **example 1.** No solid was formed and thus could not be collected; interpreting that slurry liquid did not generate any solid material that added to the weight in CPVC resin.

**TABLE 1** is provided herein below which summarizes the above examples:

| Example | PVC slurry /g | Wavelength of UV rays (nm) | Temp (°C) | Time (h) | Speed of stirrer (rpm) | Washing agent | %Cl (by weight) |
|---|---|---|---|---|---|---|---|
| 1 | 1081 | 254 | 70 | 6 | 650 | Water | 67.37 |
| 2 | 1081 | 254 | 70 | 4 | 650 | Water | 65.96 |
| 3 | 1081 | 254 | 70 | 2 | 650 | Water | 64.06 |
| 4 | 1081 | 254 | 90 | 6 | 650 | Water | 66.2 |
| 5 | 1081 | 350 | 70 | 6 | 650 | Water | 66.3 |
| 6 | 1081 | 254 | 70 | 6 | 400 | Water | 66.00 |
| 7 | 1081 | 254 | 70 | 6 | 900 | Water | 66.02 |

(continued)

| Example | PVC slurry /g | Wavelength of UV rays (nm) | Temp (°C) | Time (h) | Speed of stirrer (rpm) | Washing agent | %Cl (by weight) |
|---|---|---|---|---|---|---|---|
| 8 | 1081 | 254 | 70 | 9 | 650 | Water | 69.22 |
| 9 | 1081 | 254 | 70 | 6 | 650 | NaOH | 66.65 |
| 10 | Slurry Liquid 850 mL | 254 | 70 | 6 | 650 | Water | 0 |

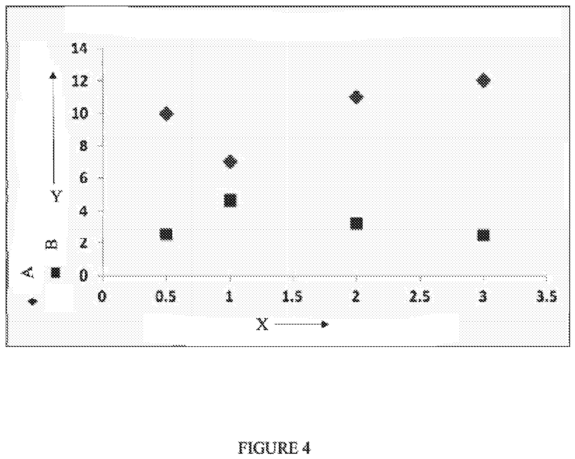

TABLE 2 shows relation between distance of light source from reactor surface, Time (h) to reach 67% chlorination (by weight) and Thermal Stability by conductivity (sec) x 100. Figure 4 illustrates a graphical relation between distance of light source from reactor surface, Time (h) to reach 67% chlorination (by weight) and Thermal Stability by conductivity (sec) x 100, where distance of light source from reactor surface is represented by "X" axis, time (h) to reach 67% chlorination (by weight) is represented by "A" and thermal stability by conductivity (sec) x 100 is represented by "B". Both "A" and "B" are represented by the "Y" axis.

**TABLE 2**

| Distance of light source from reactor surface (cm) | Time (h) to reach 67% chlorination (by weight) | Thermal Stability by conductivity (sec) x 100 |
|---|---|---|
| 0.5 | 10 | 2.52 |
| 1 | 7 | 4.68 |
| 2 | 11 | 3.24 |
| 3 | 12 | 2.5 |

In light of the TABLE 2, time to reach 67% chlorination (by weight) is minimal when the light source is disposed at a distance of 1cm from the reactor surface. Further, thermal stability by conductivity is maximum when the light source is disposed at a distance of 1cm from the reactor surface.

TABLE 3 shows a relationship between blade angle, time taken to reach 67% chlorination (by weight) of PVC and thermal stability by conductivity (sec) x 100. Figure 4 illustrates a graphical relation between blade angle, time taken to reach 67% chlorination (by weight) of PVC and thermal stability by conductivity (sec) x 100, where blade angle in degrees is represented by "X" axis, time taken to reach 67% chlorination (by weight) of PVC is represented by "A" and thermal stability by conductivity (sec) x 100 is represented by "B". Both "A" and "B" are represented by the "Y" axis.

**TABLE 3**

| Blade angle (degree) of stirrer | Time (h) to reach 67% chlorination (by weight) | Thermal stability by conductivity (sec) x 100 |
|---|---|---|
| 10 | 9 | 1.08 |
| 30 | 7 | 3.24 |
| 45 | 5 | 4.68 |
| 60 | 6 | 1.8 |
| 90 | 9 | 1 |

In light of TABLE 3, time to reach 67% chlorination (by weight) is minimal at a blade angle of 45 degrees. Further, thermal stability by conductivity is maximum at a blade angle of 45 degrees.

## TECHNICAL ADVANCEMENTS AND ECONOMIC SIGNIFICANCE

The technical advantages of the apparatus envisaged by the present disclosure include the realization of:

• an apparatus that provides a homogeneous mass of the fluid;

- an apparatus that increases reaction rate in halogenation process;
- an apparatus that facilitates a uniform and increased the rate of reaction;
- an apparatus that uniformly distributes the temperature within a reaction vessel;
- an apparatus that eliminates formation of hot spots in the reaction vessel;
- an apparatus that eliminates formation of layer on the upper surface of the slurry within the reaction vessel;
- an apparatus that is simple in construction;
- an apparatus that halogenates a polymer in a short period of time;
- an apparatus that consumes lower energy; and
- an apparatus that eliminates treatment of the slurry before halogenation process.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

**Claims**

1. An apparatus (100) for halogenation of a polymer, said apparatus comprising:

   a reactor (102) for receiving polymer slurry for halogenation of said polymer;
   at least one light source (104) disposed outside of said reactor (102) at a distance ranging from 0.5 centimetre to 2 centimetres for facilitating irradiation into said slurry;
   a stirrer (106) configured to prevent formation of a layer on an upper surface of said slurry within said reactor (102), the stirrer (106) having from 2 to 10 blades (118) attached to a spindle (120), the blades (118) having a blade angle of approximately 45 degrees, the stirrer (106) disposed within the reactor (102) and adapted to agitate said slurry at a speed of stirrer ranging from 400 rpm to 800 rpm such that the tip of vortex formed by stirring process remains above the blades (118), ; wherein the stirrer (106) is configured to rotate the sets of blades (118) in the same direction and further includes at least one impeller (122) , the or each impeller (122) having a central opening (124), the spindle (120) is co-axially inserted through the central opening (124), the blades (118) are radially extended from the impeller (122) , and
   a heater (108) adapted to heat said polymer slurry.

2. The apparatus (100) as claimed in claim 1, wherein at least one light source (104) is disposed at a distance of 1 centimetre from said reactor (102).

3. The apparatus (100) as claimed in claim 1, wherein at least one light source (104) is a ultra-violet light source.

4. The apparatus (100) as claimed in claim 3, wherein at least one light source (104) radiates a light of wavelength in the range of 250 nm to 355 nm.

5. The apparatus (100) as claimed in claim 1 further comprising at least one temperature sensing element for sensing the temperature of said slurry.

6. A process for halogenating a polymer using apparatus (100) claimed in claim 1, said process comprising of reacting stirred aqueous PVC slurry with chlorine gas to effect at least 67% halogenation (by weight) of said polymer over a time period ranging between 5 hours and 12 hours.

7. The process claimed in claim 6, wherein the reaction is carried out at a temperature in the range from 60-100 °C, preferably 70 °C.

8. The apparatus (100) as claimed in claim 1, wherein said irradiation is carried out using irradiation flux in the range of 10 to 50 mWatts/cm$^2$, preferably 15 to 25 mWatts/cm$^2$.

**Patentansprüche**

1. Vorrichtung (100) zur Halogenierung eines Polymers, wobei die Vorrichtung Folgendes umfasst:

    einen Reaktor (102) zur Aufnahme des Polymerschlamms zur Halogenierung des Polymers;
    mindestens eine Lichtquelle (104), die außerhalb des Reaktors (102) in einem Abstand im Bereich von 0,5 Zentimeter bis 2 Zentimeter angeordnet ist, um die Bestrahlung des Schlamms zu ermöglichen;
    ein Rührwerk (106), das so ausgelegt ist, dass es die Ausbildung einer Schicht auf einer Oberfläche des Schlamms innerhalb des Reaktors (102) verhindert, wobei das Rührwerk (106) von 2 bis 10 Schaufeln (118) aufweist, die an einer Spindel (120) angebracht sind, wobei die Schaufeln (118) einen Schaufelwinkel von rund 45 Grad aufweisen, wobei das Rührwerk (106) innerhalb des Reaktors (102) angeordnet ist und so eingerichtet ist, dass es den Schlamm bei einer Geschwindigkeit des Rührwerks im Bereich von 400 U/min bis 800 U/min rührt, so dass die Spitze des Wirbels, der durch den Rührvorgang ausgebildet wird, oberhalb der Schaufeln (118) bleibt; wobei das Rührwerk (106) so ausgelegt ist, dass es die Schaufelsätze (118) in der gleichen Richtung dreht und ferner mindestens ein Flügelrad (122) enthält, wobei das eine oder jedes Flügelrad (122) eine mittige Öffnung (124) aufweist, wobei die Spindel (120) koaxial durch die mittige Öffnung (124) eingefügt wird, sich die Schaufeln (118) radial vom Flügelrad (122) erstrecken und eine Heizung (108) zum Erwärmen des Polymerschlamms eingerichtet ist.

2. Vorrichtung (100) nach Anspruch 1, wobei die mindestens eine Lichtquelle (104) in einem Abstand von 1 Zentimeter vom Reaktor (102) angeordnet ist.

3. Vorrichtung (100) nach Anspruch 1, wobei mindestens eine Lichtquelle (104) eine Ultraviolett-Lichtquelle ist.

4. Vorrichtung (100) nach Anspruch 3, wobei mindestens eine Lichtquelle (104) Licht mit einer Wellenlänge im Bereich von 250 nm bis 355 nm abstrahlt.

5. Vorrichtung (100) nach Anspruch 1, ferner mindestens ein Temperaturmesselement zum Messen der Temperatur des Schlamms umfassend.

6. Verfahren zur Halogenierung eines Polymers unter Verwendung der Vorrichtung (100) nach Anspruch 1, wobei das Verfahren die Reaktion des gerührten wässrigen PVC-Schlamms mit Chlorgas umfasst, um eine mindestens 67%ige Halogenierung (nach Gewichts-%) des Polymers über einen Zeitraum im Bereich zwischen 5 Stunden und 12 Stunden zu bewirken.

7. Verfahren nach Anspruch 6, wobei die Reaktion bei einer Temperatur im Bereich von 60 - 100 °C, vorzugsweise bei 70 °C erfolgt.

8. Vorrichtung (100) nach Anspruch 1, wobei die Bestrahlung unter Verwendung eines Lichtstroms im Bereich von 10 bis 50 mWatts/cm$^2$, vorzugsweise 15 bis 25 mWatts/cm$^2$ erfolgt.

**Revendications**

1. Appareil (100) destiné à l'halogénation d'un polymère, ledit appareil comprenant

    : un réacteur (102) destiné à recevoir une suspension de polymère pour l'halogénation dudit polymère ;
    au moins une source de lumière (104) disposée à l'extérieur dudit réacteur (102) à une distance allant de 0,5 centimètre à 2 centimètres pour faciliter l'irradiation dans ladite suspension ;
    un agitateur (106) configuré pour empêcher la formation d'une couche sur une surface supérieure de ladite suspension à l'intérieur dudit réacteur (102), l'agitateur (106) ayant de 2 à 10 pales (118) fixées à un axe (120), les pales (118) ayant un angle de pale d'environ 45 degrés, l'agitateur (106) disposé à l'intérieur du réacteur (102) et adapté pour agiter ladite suspension à une vitesse d'agitation allant de 400 tr/min à 800 tr/min de sorte que la pointe du vortex formé par le processus d'agitation reste au-dessus des pales (118),.. ; dans lequel l'agitateur (106) est configuré pour faire tourner les ensembles de pales (118) dans la même direction et comprend en outre au moins une roue (122), la ou chaque roue (122) ayant une ouverture centrale (124), la broche (120) est insérée de manière coaxiale à travers l'ouverture centrale (124), les pales (118) sont étendues de manière radiale à partir de la roue (122), et

un appareil de chauffage (108) adapté pour chauffer ladite suspension de polymère.

2. Appareil (100) selon la revendication 1, dans lequel au moins une source de lumière (104) est disposée à une distance de 1 centimètre dudit réacteur (102).

3. Appareil (100) selon la revendication 1, dans lequel au moins une source de lumière (104) est une source de lumière ultraviolette.

4. Appareil (100) selon la revendication 3, dans lequel au moins une source de lumière (104) émet une lumière d'une longueur d'onde comprise entre 250 nm et 355 nm

5. Appareil (100) selon la revendication 1, comprenant en outre au moins un élément de détection de la température permettant de capter la température de ladite boue.

6. Procédé d'halogénation d'un polymère à l'aide de l'appareil (100) selon la revendication 1, ledit procédé consistant à faire réagir une suspension aqueuse de PVC agitée avec du gaz chloré afin d'obtenir une halogénation d'au moins 67 % (en poids) dudit polymère sur une période de temps comprise entre 5 heures et 12 heures.

7. Procédé selon la revendication 6, dans lequel la réaction est effectuée à une température comprise entre 60 et 100 °C, de préférence à 70 °C.

8. Appareil (100) selon la revendication 1, dans lequel l'irradiation est effectuée à l'aide d'un flux d'irradiation compris entre 10 et 50 mWatts/cm$^2$, de préférence entre 15 et 25 mWatts/cm$^2$.

FIGURE 1

106

120

118

**FIGURE 2**

124

118

122

**FIGURE 3**

FIGURE 4

FIGURE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3591571 A
- US 4377459 A
- US 4102760 A
- US 6384149 B
- GB 1318078 A
- US 6197895 B
- US 2291574 A
- US 2503252 A
- US 2920064 A
- WO 2014061035 A
- EP 2377611 A
- CA 2854621
- US 4874823 A
- US 3736240 A